# EUROPÄISCHE PATENTSCHRIFT

(11) **EP 0 838 667 B1**
(45) Veröffentlichungstag und Bekanntmachung des Hinweises auf die Patenterteilung: **07.04.2004**
(21) Anmeldenummer: 97117375.2
(22) Anmeldetag: 08.10.1997
(51) Int. Cl.: G01F 22/00, G01N 9/02, G01F 13/00, G01F 11/00

(54) **Verfahren und Vorrichtung zur Bestimmung des Liefervolumens einer Partie Schüttgut, wie zum Beispiel Bodenhilfsstoffe, Kultursubstrate**
Method and device for determining the volume of a batch of material, such as cultivation substrates or auxiliary materials
Dispositif et méthode pour déterminer le volume d'une charge de matériel en vrac, tel que substrats de culture ou matériaux auxiliaires des sols

(30) Priorität: 22.10.1996 DE 19643589
(43) Veröffentlichungstag der Anmeldung: 29.04.1998
(73) Patentinhaber: Albert Zubrägel Maschinenbau GmbH, 49393 Lohne (DE)
(72) Erfinder: Zubrägel,Albert, D-49393 Lohne (DE)
(74) Vertreter: Jabbusch, Wolfgang, Dr.Jur. Jabbusch, Wehser & Lauerwald Patentanwälte

(56) Entgegenhaltungen:
- EP-A- 0 042 245
- DE-A- 4 013 246
- DE-A- 4 017 652
- US-A- 4 209 097
- US-A- 5 327 708

## Beschreibung

Die Erfindung betrifft ein Verfahren zur Bestimmung des Liefervolumens einer Partie Schüttgut, wie zum Beispiel Bodenhilfsstoffe, Kultursubstrate, bei dem aus der Partie wenigstens eine Probe entnommen wird, die Proben gesiebt werden und mit den gesiebten Proben ein ein vorbestimmtes Volumen aufweisender Meßbehälter gefüllt wird, der Inhalt des vollständig gefüllten Meßbehälters gewogen wird, die Schüttdichte des Inhalts des Meßbehälters ermittelt wird, indem der Quotient aus Gewicht des Inhalts des Meßbehälters als Dividend und Volumen des Meßbehälters als Divisor bestimmt wird und bei dem das Gewicht der gesamten Partie ermittelt wird und der Wert des Gewichtes der Partie mit dem Wert der Schüttdichte des Inhalts des Meßbehälters dividiert wird.

Die Erfindung betrifft auch eine Vorrichtung zur Durchführung des vorgenannten Verfahrens.

Nach der DE 40 13 246 ist es bekannt, aus Schüttgut eine bestimmte Fraktion auszusieben und deren Schüttdichte zu bestimmen, indem das Gewicht und Volumen einer in einem Meßbehälter eingegebenen Probe der ausgesiebten Fraktion ermittelt und der daraus gebildete Quotient, wie vorbeschrieben, berechnet wird.

Eine Bestimmung des Liefervolumens einer gesamten Partie des Schüttgutes ist damit nicht bestimmbar.

Eine Partie von Bodenhilfsstoffen oder Kultursubstraten kann als Fertigpackung, aber auch als lose Lieferung in den Handel gebracht werden. Das Liefervolumen einer Partie muß überprüft werden, wie es der Entwurf der deutschen Norm DIN 11512-2 vom April 1996 vorsieht. Die Norm schreibt die vorgenannten Arbeitsschritte zur Bestimmung des Liefervolumens einer Partie vor, die bisher manuell durchgeführt werden. Dabei wird wie folgt vorgegangen:

Bei loser Lieferung der Partie werden an verschiedenen Stellen manuell Proben gezogen. Bei Fertigpackungen werden aus verschiedenen Packungen manuell Proben gezogen. Jede gezogene Probe wird einem ersten Siebdurchgang zugeführt.

Der dabei abgesiebte erste Teil der Probe wird in dem Meßbehälter aufgefangen. Der im ersten Siebdurchgang nicht abgesiebte Teil der Probe mit gröberer Kornfraktion durchläuft anschließend einen zweiten Siebdurchgang mit einem Sieb, das eine gröbere Sieblinie als das Sieb des ersten Siebdurchganges aufweist. Mit anderen Worten wird also der im jeweiligen Siebdurchgang gesiebte Teil der Probe in den Meßbehälter gefüllt und das im Siebdurchgang nicht gesiebte Überkorn einem nachfolgenden Siebvorgang unterworfen.

In dem Meßbehälter befindet sich nach der Abwicklung sämtlicher Siebvorgänge mit Sieben unterschiedlicher Sieblinien letztendlich eine Schichtung aus nacheinander abgesiebten Kornfraktionen der Probe. Diese Schichtung ergibt ein Separieren der einzelnen Kornfraktionen, bewirkt also eine Entmischung der Probe, so daß die Probe hinsichtlich ihrer Zusammensetzung nicht repräsentativ für die gesamte Partie des Schüttgutes ist.

Die beschriebenen Siebvorgänge müssen unter Umständen mehrmals wiederholt werden, um den Meßbehälter mit gesiebten Proben zu füllen. Somit wird der Arbeitsaufwand nachteilig beeinflußt.

Bei der manuellen Siebung erhöht die Anzahl der zu verwendenden Siebe mit unterschiedlichen Sieblinien ebenfalls den Arbeitsaufwand. Gerade bei größeren Partien kann dann der Arbeitsaufwand durch die Befüllung mehrere Meßbehälter mit gesiebten Proben unerwünscht ansteigen. Deshalb werden in der Regel nur wenige verschiedene Siebe benutzt. Allerdings werden dann nur bestimmte Kornfraktionen der Proben der Partie gesiebt bzw. aufgelockert. Die nicht gesiebten und aufgelockerten Kornfraktionen der Proben werden als Überkorn deklariert und sollen bei den bekannten Verfahren der DIN-Vorschrift entsprechend, ebenfalls in den Meßbehälter eingegeben werden. In der Praxis kommt es jedoch regelmäßig vor, daß das Überkorn nicht mühsam zerrieben und doch noch gesiebt wird, sondern auf irgendeine Weise entsorgt und damit der Partie entzogen wird. Damit entsprechen die gesiebten Proben nicht der zu liefernden Partie, denn es fehlen bei der Bestimmung der Schüttdichte bestimmte Kornfraktionen, insbesondere die Fraktion des sogenannten "Überkorns". Da die gesiebten Proben als Grundlage für die Bestimmung des Liefervolumens der Partie dienen, kann die Qualität der Volumenbestimmung bei bekannten Verfahren einerseits durch die Entmischung der Proben und andererseits durch die fehlenden Kornfraktionen nachteilig beeinflußt werden.

Der Erfindung liegt die Aufgabe zugrunde, ein Verfahren der vorbezeichneten Gattung hinsichtlich der Arbeitsintensität zu vermindern sowie hinsichtlich der Qualität zu verbessern, sowie eine Vorrichtung zur Durchführung des Verfahrens bereitzustellen.

Diese Aufgabe ist durch die Merkmale der unabhängigen Ansprüche 1 bzw. 9 gelöst. Für die Siebung der Proben wird eine in einem Siebdurchgang verschiedene Kornfraktionen absiebende, maschinell betätigte, als Rollsieb ausgebildete Siebanlage verwendet während des Siebdurchganges wird zunächst eine feine Kornfraktion ausgesiebt und danach jede ausgesiebte Kornfraktion zusammen mit der jeweils übergelaufenen nächst gröberen Kornfraktion erneut durchgesiebt, und nicht gesiebtes Überkorn und die gesiebten Kornfraktionen des Schüttgutes werden an der Abwurfseite der Siebanlage so dann, wie sie anfallen, in den Meßbehälter gefüllt.

Bei dem erfindungsgemäßen Verfahren wird die Aufbereitung der Proben einer Partie in einem Siebdurchgang durchgeführt. Dieser eine Siebdurchgang umfaßt die Aufbereitung der Proben, indem zunächst eine feine Kornfraktionen ausgesiebt wird und anschließend diese ausgesiebte Kornfraktion zusammen mit sämtlichen verbleibenden, noch nicht gesiebten gröberen Kornfraktionen wieder durchgesiebt wird, und zwar vorzugsweise in einer Siebebene des Rollsiebes, die eine zur jeweils vorangegangenen Siebebene gegenläufige Roll- beziehungsweise Förderrichtung hat, so daß am Ende des gesamten Siebdurchganges aufbereitete Proben abgegeben werden, die nicht in einzelnen separierten Kornfraktionen vorliegen. Folglich findet auch keine Entmischung der Proben statt, so daß die Proben hinsichtlich ihrer Zusammensetzung repräsentativ für die gesamte Partie des Schüttgutes sind.

Das erfindungsgemäße Verfahren ist nicht nur bei Bodenhilfsstoffen oder Kultursubstraten anwendbar, sondern auch bei Säge- und Hobelspänen, Katzenstreu oder dergleichen.

Dadurch, daß bei dem erfindungsgemäßen Verfahren eine maschinell betätigte, als Rollsieb ausgebildete Siebanlage verwendet wird, kann bei vermindertem Arbeitsaufwand, eine Vielzahl von Proben in kurzer Zeit intensiv gesiebt werden, wobei gleichzeitig die Qualität der aus den festgestellten Schüttdichten der einzelnen Proben zu bestimmenden mittleren Schüttdichte der Partie, und damit letztlich die Bestimmung des Liefervolumens der Partie verbessert ist. Der Einsatz von Rollsieben hat dabei auch noch den Vorteil, daß eine ganz besonders intensive Auflockerung und damit gesteigerte Siebqualität erreicht wird. Die Auflockerung ist besonders vorteilhaft, da Vorverdichtungen bewirkt durch langes Lagern, lange Transportwege, Eigenbelastung und dergleichen, wieder aufgelöst werden.

Die der Rollsiebanlage zugeführten Proben der Partie werden in verschiedenen Stufen aufgelockert und dabei gesiebt. Durch die Auflockerung bzw. durch Auflösung der Vorverdichtung der Kornfraktionen der Proben wird die Menge des nicht siebbaren Überkorns stark reduziert und somit wird eine optimale Siebung der zugeführten Proben der Partie erreicht. Die Rollsiebanlage gibt mit Vorteil nicht nur die gesiebten Kornfraktionen, sondern auch das selbst von einer Rollsiebanlage nicht mehr siebbare Überkorn an den Meßbehälter ab. Damit ist die gesiebte Probe letztlich auch nach ihrer Siebung mit der aus der Partie entnommenen Probe hinsichtlich ihrer Zusammensetzung mit Vorteil noch identisch.

Die Verwendung einer Siebanlage in Form von Rollsieben hat auch noch den Vorteil, daß der Antrieb der Rollsiebe problemlos regelbar ist. Somit kann die Umfangsgeschwindigkeit der Siebsterne der Rollsiebe der jeweils gegebenen Vorverdichtungen und den Kornverhältnissen angepaßt werden.

Eine vollständige Füllung des ein vorbestimmtes Volumen aufweisenden Meßbehälters wird dadurch erreicht, daß der Füllvorgang des Meßbehälters in Abhängigkeit von der Höhe des über den Öffnungsrand des Meßbehälters stehenden Schüttkegels abgebrochen wird und danach zum Abstreichen des Schüttkegelüberstandes eine Abstreichvorrichtung betätigt wird. Bei ausreichender Füllung des Meßbehälters wird der Füllvorgang zum Beispiel durch einen Füllstandsmelder abgebrochen, der steuerungsmäßig mit dem Antrieb der Siebanlage und/oder mit dem Antrieb der Proben-Entnahme-Einrichtung gekoppelt sein kann und damit letztlich die Zuführung weiterer Proben in den Meßbehälter stoppt. Die einschlägige Vorschrift schreibt eine bestimmte Verdichtung des in dem Meßbehälter befindlichen Schüttguts vor. Durch die vorbestimmte Höhe des Schüttkegels kann vorteilhaft ein der Höhe des Schüttkegels entsprechendes Eigengewicht dazu dienen, die vorgeschriebene Verdichtung des in dem Meßbehälter befindlichen Schüttguts zu erreichen.

Damit der abgestrichene Anteil der Probe der zu liefernden Partie nicht fehlt, wird dieser der Partie wieder zugeführt.

Eine Möglichkeit das Gewicht des Inhalts des Meßbehälters zu bestimmen, besteht darin, daß der Meßbehälter mit Inhalt nach dem Abstreichen zunächst gewogen, das Gewicht des Inhalts bestimmt und danach der Meßbehälter entleert wird. Dabei bestimmt zum Beispiel eine elektronische wiegeeinrichtung das Leergewicht des Meßbehälters. Nach der vollständigen Füllung des Meßbehälters wird das Gewicht des Meßbehälters erneut durch die Wiegeeinrichtung bestimmt. Das Leergewicht des Meßbehälters wird nun von dem Gewicht des gefüllten Meßbehälters subtrahiert und somit das Gewicht des Inhalts des Meßbehälters bestimmt. Die wiegeeinrichtung kann an eine Datenverarbeitung angeschlossen sein. Durch die Datenverarbeitung sind Nettogewichte der Inhalte des Meßbehälters mit Vorteil registrierbar. Aus den registrierten Nettogewichten der jeweiligen Meßbehälterinhalte kann zum Beispiel vorteilhaft eine mittlere Schüttdichte der entnommenen Proben durch eine Datenverarbeitung bestimmt und abrufbar gespeichert werden.

Eine weitere Möglichkeit das Gewicht des Inhalts des Meßbehälters zu bestimmen sieht vor, daß der Meßbehälter nach dem Abstreichen des Schüttkegels entleert und der ausgeleerte Inhalt gewogen wird. Nach der vollständigen Füllung des Meßbehälters wird der Inhalt auf eine wiegeeinrichtung, zum Beispiel eine elektronischen wiegeeinrichtung entleert und das Gewicht des Inhalts des Meßbehälters bestimmt. Auch hier kann das Nettogewicht des Inhalts durch eine Datenverarbeitung registriert werden.

Damit die gesiebten Proben der Partie nicht fehlen, wird der Inhalt des Meßbehälters nach der Bestimmung seines Gewichtes der Partie wieder zugeführt, zum Beispiel durch einfaches Ausleeren.

Bei einer losen Lieferung der Partie ist mit besonderem Vorteil ein Verladevorgang vorgesehen, bei dem die Partie an ihrem Lagerort abgebaut und der Abbau kontinuierlich abgefördert, zum Beispiel einer Verladung zugeführt wird, wobei die Proben aus dem abgeförderten Abbau entnommen werden. Die zu liefernde, lose Partie kann kontinuierlich und somit schnellstmöglich, zum Beispiel über ein umlaufendes Verladeband abgefördert werden. Am Verladeband kann sich eine entsprechende Wiegeeinrichtung befinden, die das Gewicht der verladenen Anteile der Partie fortlaufend registriert, so daß zum Beispiel das Gesamtgewicht zeitgleich mit dem Verladevorgang der Partie ermittelt und nach Beendigung der Verladung bestimmbar ist. Die Wiegeeinrichtung kann ebenfalls in vorteilhafter Weise an eine zentrale Datenverarbeitung angeschlossen sein. Die Datenverarbeitung kann, bei entsprechender Programmierung, aus dem registrierten Gewicht des Inhalts des Meßbehälters und dem bekannten Volumen des Meßbehälters eine Schüttdichte des Inhalts der Meßbehälter bestimmen. Sobald dann auch das Gesamtgewicht der Partie bestimmt ist, zum Beispiel unmittelbar nach der Beendigung des Verladevorgangs, kann das Liefervolumen der verladenen Partie durch die Datenverarbeitung ausgegeben werden.

Eine sichere und einfache Proben-Entnahme ist bei dem erfindungsgemäßen Verfahren dadurch möglich, daß zur Proben-Entnahme ein maschinell arbeitender Förderer verwendet wird und daß die vom Förderer aufgenommenen Proben im Bereich der Eingabe der Siebanlage in die Siebanlage abgeworfen werden. Ohne die Verladung der Partie zu behindern, werden die Proben während der Verladung mit dem maschinell arbeitenden Förderer aus dem vom Verladeband abgeförderten Fördergut entnommen. Aufgrund der kontinuierlichen Förderung der Partie während der Verladung, entsprechen die entnommenen Proben einer Proben-Entnahme an unterschiedlichen Stellen der Partie. Damit ist die erfolgende Probenauswahl weitgehend repräsentativ für die gesamte Partie. Der Förderer transportiert die entnommenen Proben und führt diese der Siebanlage zu. Der regelbare Antrieb der Siebanlage und der Antrieb des Förderers sind steuerungsmäßig mit dem Füllstandsmelder des Meßbehälters koppelbar, so daß bei ausreichender Füllung des Meßbehälters die Proben-Entnahme und/oder die Siebung einfach unterbrochen werden kann. Selbstverständlich kann der Verladevorgang währenddessen weiter laufen.

Beispielsweise bei besonders umfangreichen Partien, kann der Vorgang der Proben-Entnahme, ihrer Siebung und Bestimmung ihrer Schüttdichte auch mehrfach, zum Beispiel während eines längeren Verladevorganges, wiederholt werden, wodurch die Qualität des Verfahrens der Bestimmung des Liefervolumens weiter verbesserbar ist.

Eine Vorrichtung zur Durchführung des vorgenannten Verfahrens, für die auch selbständiger Schutz beansprucht wird, zeichnet sich aus durch eine in einem Siebdurchgang verschiedene Kornfraktionen absiebende und mischende, maschinell betätigte Siebanlage, die als Mehrdeck-Rollsieb ausgebildet ist.

Durch die erfindungsgemäße Ausbildung der Siebanlage als maschinell betätigtes Mehrdeck-Rollsieb, ist die Siebung der Proben mit gegenüber der Handsiebung geringerem Arbeitsaufwand durchführbar. Ein Mehrdeck-Rollsieb weist mehrere Siebebenen auf, wobei jede Siebebene aus parallel angeordneten Wellen besteht. Auf jeder Welle sind mehrere Siebsterne mit radial zur Welle stehenden Sternarmen nebeneinander angeordnet. Durch den wählbaren Abstand zwischen den Siebsternen benachbarter Wellen und durch regelbare Umfangsgeschwindigkeit der Siebsterne, die eine Siebebene bilden, kann vorteilhaft mit jeder der Siebebenen eine bestimmte Kornfraktion gesiebt werden. Das nicht in einer jeweiligen Siebebene siebbare Überkorn der Probe wird dabei von den rotierenden Siebsternen über diese Siebebene hinweg transportiert und gelangt ebenso wie die gesiebte Kornfraktion zur jeweils nachfolgenden Siebebene. Nach dem Durchlaufen aller Siebebenen der Siebanlage wird noch vorhandenes Überkorn schließlich, zum Beispiel an der Abwurfseite, ebenso wie der gesiebte Anteil der Probe, aufgefangen.

Dabei ist das Mehrdeck-Rollsieb mit besonderem Vorteil derart ausgebildet, daß jede Siebebene eine zur jeweils vorangegangenen Siebebene gegenläufige Roll- beziehungsweise Fördereinrichtung hat.

Um die gesiebten Proben aufzufangen und einem Meßbehälter zuzuführen, ist bei der Vorrichtung vorgesehen, daß sie eine von der Abwurfseite der Siebanlage zur Einwurfseite eines Meßbehälters führende Transporteinrichtung aufweist. Die Transporteinrichtung kann zum Beispiel als umlaufendes Transportband ausgebildet sein. Das unter der Siebanlage angeordnete Transportband nimmt die abgeworfenen gesiebten Proben, sowie das Überkorn, auf und transportiert diese zum Meßbehälter.

Die Steuerung der Füllung des Meßbehälters ist in vorteilhafter Weise so ausgestaltet, daß dem Meßbehälter ein mit dem Antrieb der Siebanlage steuerungsmäßig gekoppelter Füllstandsmelder zugeordnet ist und daß der Füllstandsmelder eine die Höhe des Schüttkegels abtastende Tasteinrichtung umfaßt. Der Füllstandsmelder kann zum Beispiel eine elektronische Schaltung umfassen, welche auf den Antrieb der Siebanlage steuerungsmäßig wirkt, und zwar in Abhängigkeit von der abgetasteten Höhe des Schüttkegels.

Bei Erreichen einer vorbestimmten Höhe des Schüttkegels wird durch ein entsprechendes Signal der Tasteinrichtung die weitere Befüllung des Meßbehälters unterbrochen, zum Beispiel indem die Siebanlage zusammen mit ihrem Transportband abgeschaltet wird. Eine allgemeine Unterbrechung der Zufuhr zum Meßbehälter reicht für die hier angestrebten Zwecke aus. So könnte zum Beispiel auch nur das Transportband in der Laufrichtung umgeschaltet werden, während die Siebanlage und die Proben-Entnahme weiterläuft. Dabei ist allerdings sicherzustellen, daß entnommene Proben, bzw. gesiebte Proben während der genannten Unterbrechung dem Verladevorgang wieder zugeführt werden. Als Tasteinrichtung ist eine den Schüttkegel tastende Hebelmechanik oder auch eine berührungslose optoelektronische Einrichtung, wie zum Beispiel eine Lichtschranke, einsetzbar.

Um den Meßbehälter vollständig zu füllen, ist bei der Vorrichtung mit Vorteil eine in Abhängigkeit der Höhe des Schüttkegels betätigbare Abstreicheinrichtung vorgesehen, die den Überstand des Schüttkegels auf eine Ebene abstreicht, die der Füllstandsebene bei Erreichen eines vorbestimmten Volumens der Füllung des Meßbehälters entspricht. Nach Erreichen einer vorbestimmten Befüllung des Meßbehälters wird die zum Beispiel steuerungsmäßig an den Füllstandsmelder angeschlossene Abstreicheinrichtung betätigt. Das Abstreichorgan der Abstreicheinrichtung ist in vorteilhafter Weise eine rotierende Fräse. Eine rotierende Fräse kann über eine Mechanik über den Öffnungsrand des Meßbehälters geführt werden, um den Überstand des Schüttkegels abzufräsen. Selbstverständlich sind auch andere Ausführungsformen des Abstreichorgans möglich, jedoch hat die rotierende Fräse den Vorteil, daß während des Abstreichens keine Verdichtung des Inhalts des Meßbehälters erfolgt.

Eine in konstruktiver Hinsicht einfache Ausgestaltung für die Zuführung des Überstandes des Schüttkegels zur Partie ist möglich durch eine Auffangeinrichtung für den abgestrichenen Teil des Schüttkegels des Inhalts des Meßbehälters sowie eine Rückführung für den aufgefangenen Teil des Schüttkegels zur Partie. Die Auffangeinrichtung kann zum Beispiel trichterförmig, wannenförmig oder dergleichen ausgebildet sein, so daß der abgestrichene bzw. abgefräste Teil der Probe aufgefangen wird und durch einfaches Abrutschen wieder der Partie zugeführt wird.

Zur Bestimmung des Gewichtes des Inhalts des Meßbehälters weist die Vorrichtung eine Wiegeeinrichtung auf. Die Wiegeeinrichtung kann als elektronische Waage ausgebildet sein. Es ist möglich die Waage und den Meßbehälter als Einheit auszubilden, wobei dann für die Bestimmung des Inhalts das Leergewicht des Meßbehälters als Subtrahent in eine zugeordnete Datenverarbeitung eingegeben wird. Es wäre auch denkbar, die Waage getrennt vom Meßbehälter anzuordnen, den Inhalt des Meßbehälters in die Waage zu entleeren und das Gewicht des entleerten Inhalts des Meßbehälters zu bestimmen.

Um die Proben wieder der Partie zuzuführen, ist der Wiegeeinrichtung eine nach der Gewichtsbestimmung betätigbare Abfuhreinrichtung für den gewogenen Inhalt des Meßbehälters zugeordnet. Die Abfuhreinrichtung ist zum Beispiel mit der Wiegeeinrichtung bzw. der elektronischen Waage steuerungsmäßig koppelbar, so daß, nach der Gewichtsbestimmung des Inhalts des Meßbehälters, die Abfuhreinrichtung betätigt wird und den gewogenen Inhalt des Meßbehälters der Partie wieder zuführt. Die Abfuhreinrichtung kann zum Beispiel als eine an der Waage bzw. am Meßbehälter angeordnete Kippvorrichtung ausgebildet sein.

Eine betriebssichere und dabei konstruktiv einfache Proben-Entnahme kann dadurch erreicht werden, daß die Vorrichtung eine Proben-Entnahme-Einrichtung aufweist, die mit einem die entnommenen Proben zum Einwurfbereich der Siebanlage transportierenden und dort abwerfenden Förderer ausgerüstet ist, wobei der Förderer ein als Endlosförderer ausgebildetes Becherwerk mit umlaufenden Bechern ist. Bei einer losen Lieferung der Partie ist eine einfache Proben-Entnahme durch den maschinell betätigten Endlosförderer mit seinen umlaufenden Bechern während der Verladung der Partie möglich.

Für die lose Lieferung einer Partie weist die Vorrichtung eine dem Abbau und der Verladung der Partie dienende Verladeeinrichtung auf. Bei großen Liefermengen ist eine solche Verladeeinrichtung vorteilhaft, um eine rasche Verladung der Partie mit geringstem Arbeitsaufwand zu gewährleisten.

Die Verladeeinrichtung ist zweckmäßigerweise ein Verladeband. Die Verwendung eines Transportbandes ist eine Möglichkeit, den Transport der zu verladenden Partie einfach und schnell durchzuführen. Selbstverständlich sind auch andere Verladeeinrichtungen einsetzbar.

Bei der maschinell betätigten Proben-Entnahme bei losen Lieferungen der Partie ist die Proben-Entnahme-Einrichtung vorteilhaft mit ihrem entnahmeseitigen Bereich dem durch das Transportband bestimmten Transportweg der am Lagerort der Partie abgebauten und zur Verladung abtransportierten Partie zugeordnet. Damit ist jede Probe vorteilhaft an einer jeweils anderen Stelle der Partie entnehmbar. Die entnommenen Proben bilden folglich einen repräsentativen Querschnitt der Zusammensetzung der gesamten Partie.

Für die letztendliche Bestimmung des Liefervolumens der zu verladenden Partie ist mit besonderem Vorteil die Verladeeinrichtung mit einer das Gewicht des'jeweils zur Verladung gebrachten Teils der Partie fortlaufend registrierenden Waage ausgerüstet. Die das Gewicht der jeweils über das Verladeband laufenden Teilmenge der Partie fortlaufend registrierende Waage, kann zum Beispiel als Förderbandwaage ausgebildet sein, wobei diese Förderbandwaage wieder mit Vorteil an eine zentrale Datenverarbeitung angeschlossen ist. Die Datenverarbeitung berechnet aus dem vorher bestimmten Gewicht des Meßbehälterinhalts und dem Volumen des Meßbehälters eine mittlere Schüttdichte der entnommenen Proben. Für die Bestimmung des Liefervolumens der Partie wird der Wert des Gesamtgewichtes der Partie mit dem Wert der mittleren Schüttdichte dividiert. Durch die Datenverarbeitung ist das bestimmte Liefervolumen der Partie abrufbar.

Ein Ausführungsbeispiel der Erfindung, aus dem sich weitere erfinderische Merkmale ergeben, ist in der Zeichnung dargestellt. Es zeigen:
- Fig. 1: eine schematische Darstellung einer Vorrichtung zur Durchführung des erfindungsgemäßen Verfahrens,
- Fig. 2: eine vergrößerte Vorderansicht eines Siebsternes der in der Vorrichtung gemäß Fig. 1 enthaltenen Siebanlage, und
- Fig. 3: eine schematische Vorderansicht einer Einzelheit der Siebanlage mit Siebsternen im Schnitt.

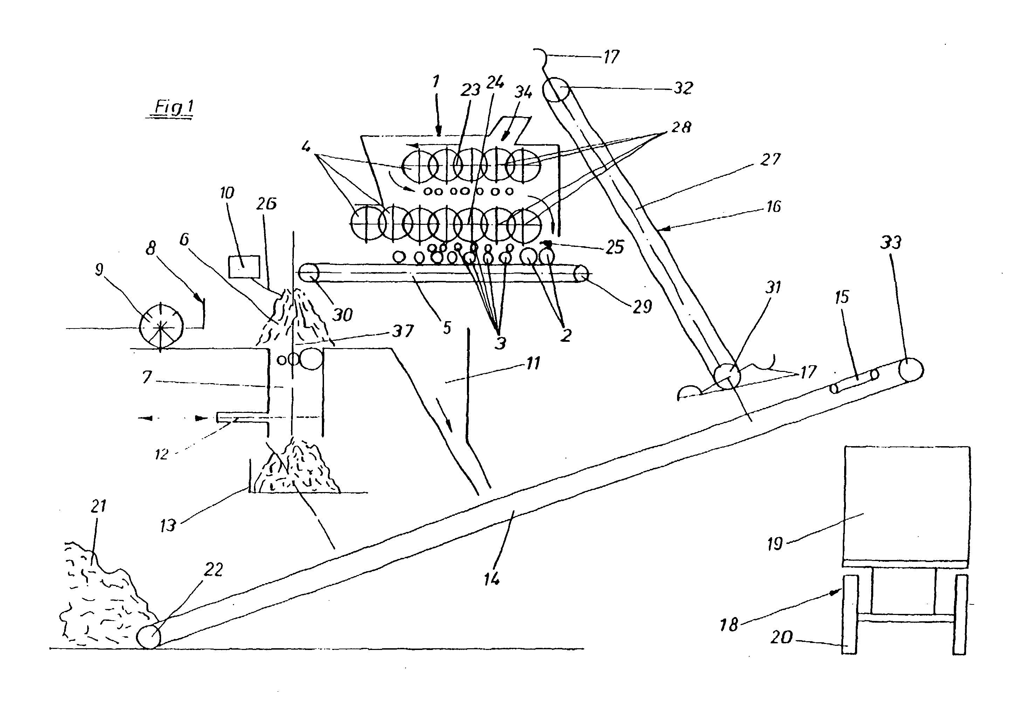

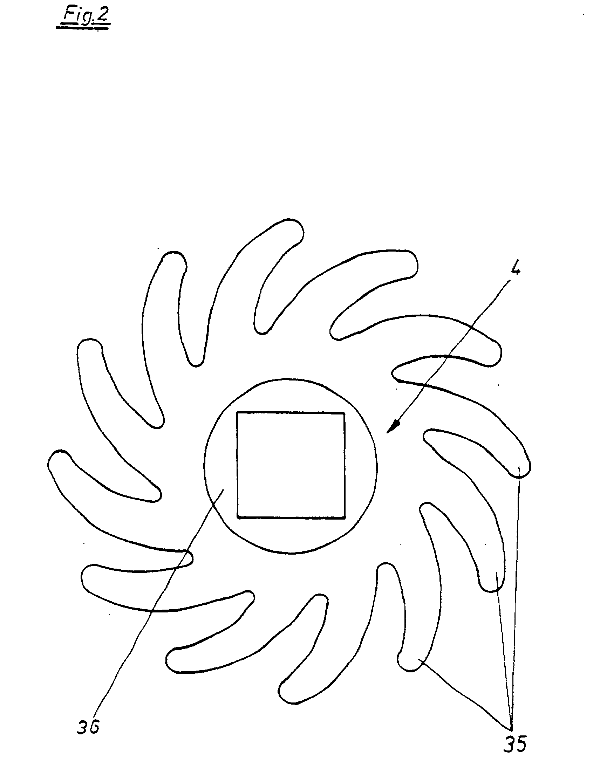

In Fig. 1 ist eine Vorrichtung zur Durchführung des Verfahrens, mit dem das Liefervolumen einer Partie Schüttgut, wie zum Beispiel Bodenhilfsstoffe, Kultursubstrate bestimmbar ist, schematisch dargestellt. Die Vorrichtung weist eine dem Abbau und der Verladung der Partie dienende Verladeeinrichtung auf, die als Verladeband 14 ausgebildet ist. Das Verladeband 14 beginnt mit seinem aufnahmeseitigen Ende 22 an einem Lagercrt 21 der Partie und endet mit seinem abgabeseitigen Ende an einem Verladeort (LKW 18). Der als Verladeort verwirklichte LKW 18 weist ein Fahrgestell 20 und eine Ladefläche, die als Container 19 ausgebildet ist, auf. Im Bereich des abgabeseitigen Endes 33 des Transportbandes 14 ist eine das Gewicht des jeweils zur Verladung gebrachten Teils der Partie fortlaufend registrierende Förderbandwaage 15 angeordnet. Eine Proben-Entnahme-Einrichtung 16 besteht aus einem Endlosförderer 27, der mit umlaufenden radial abstehende Bechern 17, ausgerüstet ist. Der Länge des Förderweges des Endlosförderers 27 ist durch die untere Umlenkrolle 31 als Entnahmebereich und durch die obere Umlenkrolle 32 als Abgabebereich begrenzt. Die untere Umlenkrolle 31 ist mit dem Entnahmebereich des Endlosförderes 27 im Bereich des durch das Verladeband 14 bestimmten Transportweges der am Lagerort abgebauten und zur Verladung abtransportierten Partie angeordnet. Die an der unteren Umlenkrolle 31 umlaufenden Becher 17 tangieren das Verladeband 14 so, daß sie dem vom Verladeband 14 herangeführten, abgebauten Teil der zu verladenden Partie Proben entnehmen. Die durch die Becher 17, aufgenommen Proben werden im Bereich einer Eingabe 34 einer Siebanlage 1 in die Siebanlage 1 abgeworfen. Die Becher 17, werden beim Umlaufen der oberen Umlenkrolle 32, entleert. Die Siebanlage 1 weist hier mit einer oberen Siebebene 23 und einer unteren Siebebene 24 auf. Jede Siebebene 23, 24 ist gebildet aus parallel angeordneten Wellen 28, wobei auf jeder rotierenden Welle 28 mehrere Siebsterne 4 sitzen, die hier als Kreise angedeutet und in Fig. 2 genauer dargestellt sind. Jeder Siebstern ist mit radial zur Welle 28 abstehenden, siebenden Sternarmen 35, 35', 35 " ausgerüstet. Der hier nicht dargestellte Überlappungsbereich 38 der Sternarme 35, 35', 35'' der Siebsterne 4 benachbarter Wellen 28 bestimmt die zu siebende Kornfraktion jeder Siebebene 23, 24. Der Überlappungsbereich 38 der Sternarme 35 ist durch die Abmessung der Sternsiebe 4 und durch den Abstand der Wellen 28 wählbar. Der Transportweg des Überkorns der Proben ist durch Pfeile in der Siebanlage 1 angedeutet. Das Überkorn 2 wird an der Abwurfseite 25 und die gesiebten Kornfraktionen 3 auf ein unter der Siebanlage 1 befindliches Transportband 5 abgeworfen. Das Transportband 5 erstreckt sich über die Abwurfseite 25 der Siebanlage 1, wobei die Länge des Transportbandes 5 durch eine erste Umlenkrolle 29 und eine im Bereich der Einwurfseite 37 eines Meßbehälters 7 angeordnete zweite Umlenkrolle 30 begrenzt ist. Der Meßbehälter 7 weist ein vorbestimmtes Volumen auf und sein Boden ist als Schieber 12 ausgebildet. Der Meßbehälter 7 wird durch das Transportband 5 mit gesiebten und gemischten Proben gefüllt. Bei der Befüllung des Meßbehälters 7 entsteht im Bereich des Öffnungsrandes des Meßbehälters 7 ein Schüttkegel 6. Der Füllvorgang des Meßbehälters 7 wird in Abhängigkeit von der Höhe des über den Öffnungsrand des Meßbehälters 7 stehenden Schüttkegels durch einen Füllstandsmelder 10 gesteuert. Der Füllstandsmelder 10 weist eine die Höhe abtastende Tasteinrichtung 26 auf. Der Füllstandsmelder 10 ist mit dem Antrieb der Siebanlage 1 und mit dem Antrieb des Transportbandes 5 steuerungsmäßig gekoppelt, so daß bei Erreichen des vorbestimmten Volumens des Meßbehälters 7 die Siebanlage 1 und/oder das Transportband 5 abschaltbar ist. Eine ebenfalls an den Füllstandsmelder 10 steuerungsmäßig gekoppelte Abstreicheinrichtung 8 ist im Bereich des Öffnungsrandes an der Einwurfseite 37 des Meßbehälters 7 angeordnet. Die Abstreicheinrichtung 8 weist als Abstreichorgan eine rotierende Fräse 9 auf, die den Überstand des Schüttkegels 6 auf eine Ebene abstreicht, die der Füllstandsebene bei Erreichen eines vorbestimmten Volumens der Füllung des Meßbehälters entspricht. Der durch die Fräse abgefräste Teil des Schüttkegels 6 wird durch eine trichterförmig ausgebildete Auffangeinrichtung 11 durch einfaches Abrutschen dem Verladeband 14 und damit der Partie wieder zugeführt. Durch die Betätigung des Schiebers 12 an der Bodenseite des Meßbehälters 7 ist der Inhalt des Meßbehälters 7 auf eine unter dem Meßbehälter 7 angeordnete elektronische Waage 13 gebbar. Die elektronische Waage 13 bestimmt das Gewicht des Inhalts des Meßbehälters 7. Durch eine Kippbewegung der Waage 13 ist der gewogene Inhalt des Meßbehälters 7 auf das Verladeband 14 kippbar. Die elektronische Waage 13 ist an eine nicht dargestellte Datenverarbeitung angeschlossen. Die Datenverarbeitung kann das jeweils durch die Waage 13 bestimmte Nettogewicht des Inhalts des Meßbehälters 7 registrieren und abrufbar speichern. Das Nettogewicht des Inhalts des Meßbehälters 7 wird mit dem vorbestimmten Volumen des Meßbehälters 7 dividiert und daraus ergibt sich die Schüttdichte des Inhalts des Meßbehälters 7. Bei der Befüllung mehrerer Meßbehälter 7 mit gesiebten Proben einer Partie kann auch eine mittlere Schüttdichte bestimmt werden. Die das Gewicht des jeweils zur Verladung gebrachten Teils der Partie fortlaufend registrierenden Förderbandwaage 15 ist ebenfalls an die Datenverarbeitung angeschlossen, so daß sich aus dem registrierten Gesamtgewicht der Partie dividiert mit der mittleren Schüttdichte des Inhalts des Meßbehälter 7 das Liefervolumen der Partie ergibt.

In Fig. 2 ist eine vergrößerte Vorderansicht des Siebsternes 4 der Siebanlage 1 dargestellt. Der Siebstern 4 weist im Umfang abstehende Sternarme 35 auf. Im Zentrum des Siebsternes befindet sich eine auf die Welle 28 passende Nabe 36.

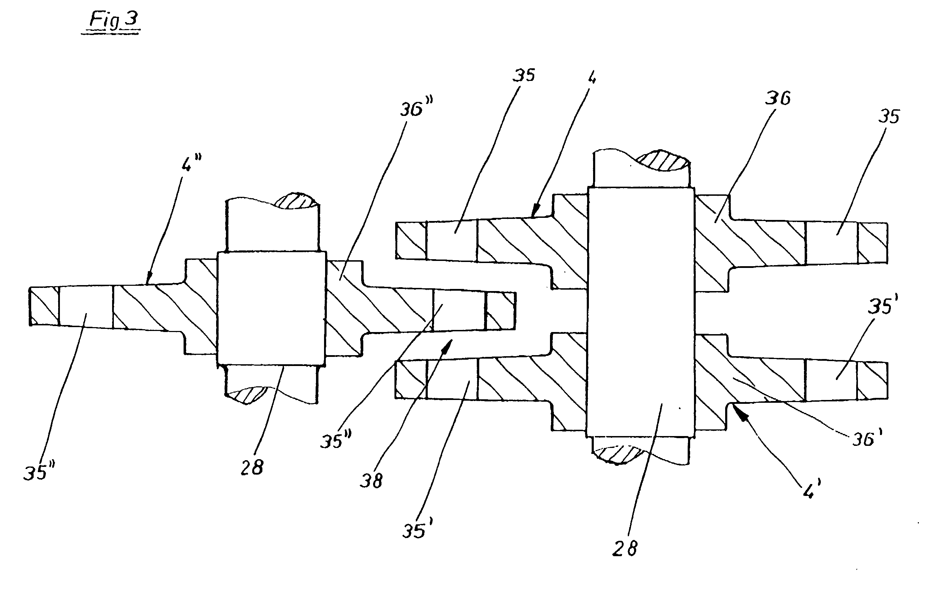

In Fig. 3 sind zwei benachbarte Wellen 28 einer Siebebene 23 bzw. 24 mit den angeordneten Siebsternen 4, 4',4" dargestellt. Die Siebsterne 4, 4', 4'' sitzen mit den Naben 36, 36', 36'' jeweils drehfest auf den Wellen 28. Der Überlappungsbereich 38 der Siebarme 35, 35', 35'' ist durch die Abmessung der Siebsterne 4, 4', 4'' und durch den Abstand der Wellen 28 wählbar. Die Größe des Überlappungsbereiches 38 der Sternarme 35, 35', 35'' bestimmt die siebbare Kornfraktion, da durch die auf den Wellen 28 rotierenden Siebsterne 4 die zu siebenden Kornfraktionen in den Überlappungsbereichen 38 aufgelockert und damit gesiebt werden.

## Patentansprüche

1. Verfahren zur Bestimmung des Liefervolumens einer Partie Schüttgut, wie zum Beispiel Bodenhilfsstoffe, Kultursubstrate, bei dem aus der Partie wenigstens eine Probe entnommen wird, die Proben gesiebt werden und mit den abgesiebten Proben ein ein vorbestimmtes Volumen aufweisender Meßbehälter gefüllt wird, der Inhalt des vollständig gefüllten Meßbehälters gewogen wird, die Schüttdichte des Inhalts des Meßbehälters ermittelt wird, indem der Quotient aus Gewicht des Inhalts des Meßbehälters als Dividend und Volumen des Meßbehälters als Divisor bestimmt wird und bei dem das Gewicht der gesamten Partie ermittelt wird und der Wert des Gewichtes der Partie mit dem Wert der Schüttdichte des Inhalts des Meßbehälters dividiert wird,
**dadurch gekennzeichnet,**
**daß** für die Siebung der Proben eine in einem Siebdurchgang verschiedene Kornfraktionen absiebende, maschinell betätigte als Rollsieb ausgebildete Siebanlage (1) verwendet wird, daß während des Siebdurchganges zunächst eine feine Kornfraktion ausgesiebt wird und danach jede ausgesiebte Kornfraktion zusammen mit der jeweils übergelaufenen nächst gröberen Kornfraktion erneut durchgesiebt wird und daß Überkorn (2) und die gesiebten Kornfraktionen (3) des Schüttgutes so dann, wie sie' anfallen, in den Meßbehälter (7) gefüllt werden.

2. Verfahren nach Anspruch 1, **dadurch gekennzeichnet, daß** der Füllvorgang des Meßbehälters (7) in Abhängigkeit von der Höhe des über den Öffnungsrand des Meßbehälters (7) stehenden Schüttkegels (6) abgebrochen wird und danach zum Abstreichen des Schüttkegelüberstandes eine Abstreicheinrichtung (8) betätigt wird.

3. Verfahren nach Anspruch 2, **dadurch gekennzeichnet, daß** der abgestrichene Anteil der Probe der Partie wieder zugeführt wird.

4. Verfahren nach einem der Ansprüche 1 - 3, **dadurch gekennzeichnet, daß** der Meßbehälter (7) mit Inhalt nach dem Abstreichen zunächst gewogen, das Nettogewicht des Inhalts bestimmt und danach der Meßbehälter (7) entleert wird.

5. Verfahren nach einem der Ansprüche 1 - 3, **dadurch gekennzeichnet, daß** der Meßbehälter (7) nach dem Abstreichen des Schüttkegels (6) entleert und der ausgeleerte Inhalt gewogen wird.

6. Verfahren nach einem der Ansprüche 4 und 5, **dadurch gekennzeichnet, daß** der Inhalt des Meßbehälters (7) der Partie wieder zugeführt wird.

7. Verfahren nach einem der vorhergehenden Ansprüche, **dadurch gekennzeichnet, daß** die Partie an ihrem Lagerort (21) abgebaut und der Abbau kontinuierlich abgefördert, z. B. einer Verladung zugeführt wird und daß die Proben aus dem abgeförderten Abbau entnommen werden.

8. Verfahren nach Anspruch 7, **dadurch gekennzeichnet, daß** zur Proben-Entnahme ein maschinell arbeitender Förderer verwendet wird und daß die vom Förderer aufgenommenen Proben im Bereich der Eingabe (34) der Siebanlage (1) in die Siebanlage (1) abgeworfen werden.

9. Vorrichtung zur Durchführung des Verfahrens nach einem der Ansprüche 1 - 8, **gekennzeichnet durch** eine in einem Siebdurchgang verschiedene Kornfraktionen (3) absiebende und mischende, maschinell betätigte Siebanlage (1), die als Mehrdeck-Rollsieb ausgebildet ist.

10. Vorrichtung nach Anspruch 9, **dadurch gekennzeichnet, daß** das Mehrdeck-Rollsieb derart ausgebildet ist, daß jede Siebebene des Rollsiebes eine zur jeweils vorangegangenen Siebebene gegenläufige Roll- beziehungsweise Förderrichtung hat.

11. Vorrichtung nach Anspruch 9 oder 10, **dadurch gekennzeichnet, daß** sie eine von der Abwurfseite (25) der Siebanlage (1) zur Einwurfseite (37) eines Meßbehälters (7) führende Transporteinrichtung aufweist, die als Transportband (5) ausgebildet ist.

12. Vorrichtung nach Anspruch 11, **dadurch gekennzeichnet, daß** dem Meßbehälter (7) ein mit einem Antrieb der Siebanlage (1) steuerungsmäßig gekoppelter Füllstandsmelder (10) zugeordnet ist.

13. Vorrichtung nach Anspruch 12, **dadurch gekennzeichnet, daß** der Füllstandsmelder (10) eine die Höhe eines Schüttkegels (6) des in den Meßbehälter (7) gefüllten Schüttgutes abtastende Tasteinrichtung (26) umfaßt.

14. Vorrichtung nach Anspruch 13, **gekennzeichnet durch** eine in Abhängigkeit von der mittels der Tasteinrichtung (26) festgestellten Höhe des Schüttkegels (6) betätigbare Abstreicheinrichtung (8), die den Überstand des Schüttkegels (6) auf eine Ebene abstreicht, die der Füllstandsebene bei Erreichen eines vorbestimmten Volumens der Füllung des Meßbehälters (7) entspricht.

15. Vorrichtung nach Anspruch 14, **dadurch gekennzeichnet, daß** ein Abstreichorgan der Abstreicheinrichtung (8) eine rotierende Fräse (9) ist.

16. Vorrichtung nach Anspruch 14, **gekennzeichnet durch** eine Auffangeinrichtung (11) für den abgestrichenen Teil des Schüttkegels (6) des Inhalts des Meßbehälters (7) sowie eine Rückführung für den aufgefangenen Teil des Schüttkegels (6) zur Partie.

17. Vorrichtung nach einem der Ansprüche 9 - 16, **gekennzeichnet durch** eine Wiegeeinrichtung zur Bestimmung des Gewichtes des Inhaltes des Meßbehälters (7).

18. Vorrichtung nach Anspruch 17, **dadurch gekennzeichnet, daß** der Wiegeeinrichtung eine nach der Gewichtsbestimmung betätigbare Abfuhreinrichtung für den gewogenen Inhalt des Meßbehälters (7) zugeordnet ist.

19. Vorrichtung nach einem der Ansprüche 9 - 18, **dadurch gekennzeichnet, daß** sie eine Proben-Entnahme-Einrichtung (16) aufweist, die mit einem die entnommenen Proben zur Eingabe (34) der Siebanlage (1) transportierenden und dort abwerfenden Förderer ausgerüstet ist.

20. Vorrichtung nach Anspruch 19, **dadurch gekennzeichnet, daß** der Förderer ein als Endlosförderer (27) ausgebildetes Becherwerk mit umlaufenden Bechern (17) ist.

21. Vorrichtung nach einem der Ansprüche 9 - 20, **dadurch gekennzeichnet, daß** sie eine dem Abbau und der Verladung der Partie dienende Verladeeinrichtung aufweist.

22. Vorrichtung nach Anspruch 21, **dadurch gekennzeichnet, daß** die Verladeeinrichtung ein umlaufendes Verladeband (14) ist.

23. Vorrichtung nach Anspruch 22 wenn der Anspruch 21 vom Anspruch 19 oder 20 abhängt, **dadurch gekennzeichnet, daß** die Proben-Entnahme-Einrichtung (16) mit ihrem entnahmeseitigen Bereich dem durch das Verladeband (14) bestimmten Transportweg der am Lagerort (21) abgebauten und zur Verladung abtransportierten Partie zugeordnet ist.

24. Vorrichtung nach Anspruch 21, **dadurch gekennzeichnet, daß** die Verladeeinrichtung mit einer das Gewicht des jeweils zur Verladung gebrachten Teils der Partie fortlaufend registrierenden Waage (15) ausgerüstet ist.

## Claims

1. Method of determining the delivery volume of a batch of bulk material, such as, for example, soil conditioners, cultivation substrates, in which at least one sample is taken from the batch, the samples are screened and a measuring container having a predetermined volume is filled with the screened samples, the contents of the completely filled measuring container are weighed, the bulk density of the contents of the measuring container is determined by the quotient being determined from the weight of the contents of the measuring container as dividend and from the volume of the measuring container as divisor, and in which the weight of the entire batch is determined and the value of the weight of the batch is divided by the value of the bulk density of the contents of the measuring container, **characterized in that** a mechanically actuated screening plant (1) screening out various grain fractions in one screening pass and designed as a rolling screen is used for screening the samples, **in that** first of all a fine grain fraction is screened out during the screening pass and then each screened-out grain fraction together with the next coarser grain fraction which has overflowed in each case is screened again, and **in that** oversize particles (2) and the screened grain fractions (3) of the bulk material are then poured into the measuring container (7) as they accumulate.

2. Method according to Claim 1, **characterized in that** the operation for filling the measuring container (7) is truncated as a function of the height of the bulk cone (6) disposed above the opening margin of the measuring container (7) and then a scraping device (8) is actuated for scraping off the bulk cone projection.

3. Method according to Claim 2, **characterized in that** the scraped-off portion of the sample is fed again to the batch.

4. Method according to one of Claims 1 to 3, **characterized in that** the measuring container (7) with the contents after the scraping-off is first of all weighed, the net weight of the contents is determined and then the measuring container (7) is emptied.

5. Method according to one of Claims 1 to 3, **characterized in that** the measuring container (7) is emptied after the bulk cone (6) has been scraped off, and the emptied contents are weighed.

6. Method according to either of Claims 4 and 5, **characterized in that** the contents of the measuring container (7) are fed again to the batch.

7. Method according to one of the preceding claims, **characterized in that** the batch is extracted at its storage location (21) and the extracted material is conveyed away continuously, e.g. is fed to a loading point, and **in that** the samples are taken from the conveyed extracted material.

8. Method according to Claim 7, **characterized in that** a mechanically working conveyor is used for the sampling, and **in that** the samples picked up by the conveyor are discharged into the screening plant (1) in the region of the inlet (34) of the screening plant (1).

9. Apparatus for carrying out the method according to one of Claims 1 to 8, **characterized by** a mechanically actuated screening plant (1) which screens and mixes various grain fractions (3) in one screening pass and is designed as a multi-deck rolling screen.

10. Apparatus according to Claim 9, **characterized in that** the multi-deck rolling screen is designed in such a way that each screening plane of the rolling screen has a rolling or conveying direction opposed to the respectively preceding screening plane.

11. Apparatus according to Claim 9 or 10, **characterized in that** it has a transport device which leads from the discharge side (25) of the screening plant (1) to the charging side (37) of a measuring container (7) and is designed as a transport belt (5).

12. Apparatus according to Claim 11, **characterized in that** a level indicator (10) coupled in terms of control to a drive of the screening plant (1) is assigned to the measuring container (7).

13. Apparatus according to Claim 12, **characterized in that** the level indicator (10) comprises a scanning device (26) which scans the height of a bulk cone (6) of the bulk material poured into the measuring container (7).

14. Apparatus according to Claim 13, **characterized by** a scraping device (8) which can be actuated as a function of the height of the bulk cone (6) established by means of the scanning device (26) and which scrapes off the projection of the bulk cone (6) down to a plane which corresponds to the filling level plane when a predetermined volume of the filling of the measuring container (7) is reached.

15. Apparatus according to Claim 14, **characterized in that** one scraping member of the scraping device (8) is a rotating tiller (9).

16. Apparatus according to Claim 14, **characterized by** a collecting device (11) for the scraped-off portion of the bulk cone (6) of the contents of the measuring container (7) and by a means of returning the collected portion of the bulk cone (6) to the batch.

17. Apparatus according to one of Claims 9 to 16, **characterized by** a weighing device for determining the weight of the contents of the measuring container (7).

18. Apparatus according to Claim 17, **characterized in that** a discharge device which can be actuated after the determination of the weight and which is intended for the weighed contents of the measuring container (7) is assigned to the weighing device.

19. Apparatus according to one of Claims 9 to 18, **characterized in that** it has a sampling device (16) which is equipped with a conveyor transporting the samples taken to the inlet (34) of the screening plant (1) and discharging them there.

20. Apparatus according to Claim 19, **characterized in that** the conveyor is a bucket elevator designed as an endless conveyor (27) and having revolving buckets (17).

21. Apparatus according to one of Claims 9 to 20, **characterized in that** it has a loading device serving to extract and load the batch.

22. Apparatus according to Claim 21, **characterized in that** the loading device is a revolving loading belt (14).

23. Apparatus according to Claim 22 if Claim 21 depends on Claim 19 or 20, **characterized in that** the sampling device (16), with its sampling-side region, is assigned to the transport path, determined by the loading belt (14), of the batch extracted at the storage location (21) and removed for the loading.

24. Apparatus according to Claim 21, **characterized in that** the loading device is equipped with a balance (15) which continuously records the weight of the batch portion loaded in each case.

## Revendications

1. Procédé pour définir le volume d'un lot de matière en vrac comme par exemple des adjuvants pour sol, des substrats de culture, selon lequel on prélève au moins un échantillon dans le lot, on crible les échantillons et avec les échantillons criblés, on remplit un récipient de mesure présentant un volume prédéfini, on pèse le contenu du récipient de mesure complètement rempli, on détermine la densité en vrac du contenu dudit récipient, le quotient étant défini à partir du poids du contenu du récipient comme dividende et du volume du récipient comme diviseur, et selon lequel on détermine le poids du lot total et on divise la valeur du poids du lot par la valeur de la densité en vrac du contenu du récipient de mesure,
**caractérisé en ce que** pour le criblage des échantillons, on utilise une installation de criblage (1) qui crible différentes fractions granulométriques en une seule opération de criblage, qui est actionnée mécaniquement et qui est conçue comme un crible à rouleaux, **en ce que** pendant le criblage, une fraction granulométrique fine est tout d'abord criblée, puis chaque fraction granulométrique ainsi obtenue est recriblée avec la fraction granulométrique plus grosse qui a débordé, et **en ce que** le refus de criblage (2) et les fractions granulométriques criblées (3) de la matière en vrac sont ainsi amenés dans le récipient de mesure (7) au fur et à mesure qu'ils sont produits.

2. Procédé selon la revendication 1, **caractérisé en ce que** le remplissage du récipient de mesure (7) est interrompu en fonction de la hauteur du cône de matière en vrac (6) qui se trouve sur le bord d'ouverture dudit récipient (7), puis on actionne un dispositif de raclage (8) pour racler le cône de matière en vrac qui dépasse.

3. Procédé selon la revendication 2, **caractérisé en ce que** la partie raclée de l'échantillon est ramenée dans le lot.

4. Procédé selon l'une des revendication 1 à 3, **caractérisé en ce qu'**après le raclage, on pèse tout d'abord le récipient de mesure (7) avec son contenu, on définit le poids net du contenu et on vide ensuite le récipient (7).

5. Procédé selon l'une des revendications 1 à 3, **caractérisé en ce qu'**après le raclage du cône de matière en vrac (6), on vide le récipient de mesure (7) et on pèse le contenu vidé.

6. Procédé selon la revendication 4 ou 5, **caractérisé en ce que** le contenu du récipient de mesure (7) est ramené dans le lot.

7. Procédé selon l'une des revendications précédentes, **caractérisé en ce que** le lot est extrait sur son lieu de stockage (21) et le volume extrait est acheminé en continu, par exemple vers un chargement, et **en ce que** les échantillons sont prélevés dans ce volume acheminé.

8. Procédé selon la revendication 7, **caractérisé en ce que** pour le prélèvement, on utilise un convoyeur mécanique et **en ce que** les échantillons recueillis par le convoyeur sont déchargés dans l'installation de criblage (1) dans la zone de l'entrée (34) de celle-ci.

9. Dispositif pour la mise en oeuvre du procédé selon l'une des revendications 1 à 8, **caractérisé par** une installation de criblage (1) qui crible et mélange des fractions granulométriques (3) différentes en une seule opération de criblage, qui est actionnée mécaniquement et qui est conçue comme un crible à rouleaux à plusieurs niveaux.

10. Dispositif selon la revendication 9, **caractérisé en ce que** le crible à rouleaux à plusieurs niveaux est conçu pour que chaque niveau ait un sens de roulement ou d'acheminement inverse par rapport au niveau précédent.

11. Dispositif selon la revendication 9 ou 10, **caractérisé en ce qu'**il comporte un dispositif de transport qui va du côté déversement (25) de l'installation de criblage (1) au côté alimentation (37) d'un récipient de mesure (7) et qui est conçu comme une bande transporteuse (5).

12. Dispositif selon la revendication 11, **caractérisé en ce qu'**un détecteur de niveau de remplissage (10) dont la commande est accouplée à un entraînement de l'installation de criblage (1) est associé au récipient de mesure (7).

13. Dispositif selon la revendication 12, **caractérisé en ce que** le détecteur de niveau de remplissage (10) comprend un dispositif d'exploration (26) qui explore la hauteur d'un cône (6) de matière en vrac versée dans le récipient de mesure (7).

14. Dispositif selon la revendication 13, **caractérisé par** un dispositif de raclage (8) qui est apte à être actionné en fonction de la hauteur du cône de matière en vrac (6) constatée à l'aide du dispositif d'exploration (26) et qui racle ledit cône (6) qui dépasse, pour l'amener à un niveau correspondant au niveau de remplissage lorsqu'un volume prédéfini de remplissage du récipient de mesure (7) est atteint.

15. Dispositif selon la revendication 14, **caractérisé en ce qu'**un organe de raclage du dispositif de raclage (8) est constitué par une fraise rotative (9).

16. Dispositif selon la revendication 14, **caractérisé par** un dispositif collecteur (11) pour la partie raclée du cône de matière en vrac (6) du contenu du récipient de mesure (7), et par un recyclage qui ramène dans le lot la quantité de cône (6) recueillie.

17. Dispositif selon l'une des revendications 9 à 16, **caractérisé par** un dispositif de pesage destiné à définir le poids du contenu du récipient de mesure (7).

18. Dispositif selon la revendication 17, **caractérisé en ce qu'**un dispositif d'évacuation, apte à être actionné après que le poids a été défini, pour le contenu pesé du récipient de mesure (7) est associé au dispositif de pesage.

19. Dispositif selon l'une des revendications 9 à 18,
**caractérisé en ce qu'**il comporte un dispositif de prélèvement (16) qui est équipé d'un convoyeur, lequel transporte les échantillons prélevés jusqu'à l'entrée (34) de l'installation de criblage (1) et les déverse à cet endroit.

20. Dispositif selon la revendication 19, **caractérisé en ce que** le convoyeur est constitué par un transporteur à godets conçu comme un convoyeur sans fin (27) et pourvu de godets en circulation (17).

21. Dispositif selon l'une des revendications 9 à 20, **caractérisé en ce qu'**il comporte un dispositif de chargement qui sert à extraire et à charger le lot.

22. Dispositif selon la revendication 21, **caractérisé en ce que** le dispositif de chargement est constitué par une bande de chargement en circulation (14).

23. Dispositif selon la revendication 22 si la revendication 21 dépend de la revendication 19 ou 20, **caractérisé en ce que** le dispositif de prélèvement (16) est associé avec sa partie située côté prélèvement au parcours, défini par la bande de chargement (14), du lot extrait sur le lieu de stockage (21) et acheminé vers le chargement.

24. Dispositif selon la revendication 21, **caractérisé en ce que** le dispositif de chargement est équipé d'une balance (15) qui enregistre en permanence le poids de la partie du lot amenée à chaque fois pour le chargement.
